# EUROPÄISCHE PATENTSCHRIFT

(11) **EP 2 160 026 B1**
(45) Veröffentlichungstag und Bekanntmachung des Hinweises auf die Patenterteilung: **22.05.2013**
(21) Anmeldenummer: 09168735.0
(22) Anmeldetag: 26.08.2009
(51) Int. Cl.: H04N 21/4335

(54) **Verfahren zur Steuerung der Aufzeichnung von ausgewählten Programmbeiträgen**
Method for controlling the recording of selected programme contributions
Procédé de commande de l'enregistrement d'éléments de programmes sélectionnés

(30) Priorität: 29.08.2008 DE 102008044490
(43) Veröffentlichungstag der Anmeldung: 03.03.2010
(73) Patentinhaber: Loewe Opta GmbH, 96317 Kronach (DE)
(72) Erfinder: Bohl, Roland, 96257 Redwitz (DE); Exner, Dieter, 95355 Presseck (DE)
(74) Vertreter: Kinnstätter, Klaus

(56) Entgegenhaltungen:
- EP-A1- 1 631 071
- US-A1- 2002 174 430
- US-A1- 2007 154 163
- US-B1- 6 865 746

## Beschreibung

Die Erfindung betrifft ein Verfahren zur Steuerung der Aufzeichnung von empfangenen Fernseh- und/oder Rundfunksignalen mit den im Oberbegriff des Anspruches 1 angegebenen Merkmalen.

Ein solches Verfahren ist aus der EP 0 753 234 B2 bekannt, wobei auf einem Display eine die EPG-Daten wiedergebende Programmzeitschrift angezeigt wird, aus der ein zu empfangender Programmbeitrag ausgewählt werden kann.

Aus der US 2003/0023989 A1 ist ein Verfahren zur Aufnahme empfangener audiovisueller Signale in einem digitalen Fernsehempfänger bekannt, bei der eine sequenzielle Liste der empfangenen Signale und der aufgezeichneten, zugehörigen Elemente in einer definierten Ordnung anzugeben ist. In vorteilhafter Ausgestaltung ist vorgesehen, dass die neuen Versionen oder Folgen der Sendungen aufgezeichnet werden. Aus einer EPG-Liste wird eine Themenliste und eine Kanalliste mit ausgewählten Beiträgen durch Bedienung generiert, aus denen eine Programmbeitragsidentifizierungsliste erstellt wird. Anhand von zugeordneten auswählbaren Nummern kann eine Abstimmung auf einen Empfangskanal vorgenommen werden. Bei Aufzeichnungen eines Beitrags aus einer Serie werden diesen ebenfalls Reihenfolgennummer zugeordnet, anhand derer die aufgezeichneten Programmbeiträge aufrufbar sind. Das Verfahren ist relativ kompliziert und erfordert einen erhöhten Beitrag des Benutzers bei der Bedienung. Einfach strukturierte Bedienungen mit automatischen Abläufen sind nicht vorgesehen.

Aus der US 2005 0204388 A1 ist ein interaktives Fernsehprogramm-EPG-System bekannt, das zur Sichtbarmachung von audiovisuellen Sendungen, die digital empfangen und in einem Speicher abgespeichert werden, es notwendig machen, dass der den Benutzer eine Liste empfangbarer Programmbeiträge erstellt. Aus dieser Liste kann der aufzuzeichnende Programmbeitrag ausgewählt werden. Auch dieses System bedient sich Ordnungszahlen, die den einzelnen Programmbeiträgen zugeordnet sind.

Aus der DE 699 10 564 T2 ist eine Einrichtung zum Aufzeichnen von Fernsehprogrammen bekannt, die ein Präferenzbestimmungsmodul zum Bewirken einer Wiedergewinnung von Attributinformationen, die jedem von einem Benutzer der Einrichtung betrachteten Fernsehprogramm entsprechen, enthält. Das Präferenzbestimmungsmodul erzeugt für die Betrachtungspräferenz des Benutzers kennzeichnende Aufzeichnungspräferenzinformationen. Ein Aufzeichnungsmodul bewirkt eine automatische Aufzeichnung der Fernsehprogramme mit denjenigen Attributinformationen, die mit den Aufzeichnungspräferenzinformationen übereinstimmen.

Weiterhin sind aus der DE 197 24 840 C1 ein Verfahren und eine Vorrichtung zur Programmierung von aufzunehmenden Sendungen für einen Videorecorder bekannt, bei denen alle Daten eines elektronischen Programmführers in einen Speicher des Videorecorders gespeichert werden. Nach der Eingabe von Suchkriterien für die Sendungen, an denen ein generelles Aufnahmeinteresse des Benutzers besteht, wird eine Suche nach den eingegebenen Suchkriterien in den abgespeicherten, nicht aufbereiteten Daten des elektronischen Programmführers durchgeführt. Der Treffer wird angezeigt, so dass er für die Aufnahme ausgewählt werden kann.

Aus der DE 699 10 564 T2 ist ein Verfahren zur automatischen Aufzeichnung von Programmen, die von einem Benutzer bevorzugt werden, bekannt, das unabhängig vom Sendungstitel arbeitet. Beispielsweise werden alle Spielfilme aufgezeichnet und dabei die alten Versionen wieder gelöscht.

Aus der DE 698 22 674 T2 ist ein Verfahren bekannt, bei dem aus der Nutzergewohnheit automatisch Vorschläge für eine Sendungsliste abgeleitet werden, in die auch manuell Sendungen hinzugefügt werden können.

Die Patentschrift US 2007/0154163 A1 betrifft ein interaktives Mediensystem, das nach Benutzervorgaben automatisch Folgen von Fernsehserien auf einem Medium aufzeichnen kann.

Die Patentschrift US 2002/0174430 A1 betrifft ein Verfahren und ein System, das einen verbesserten, persönlichen Videorekorder und eine interaktive Fernsehprogrammfunktionalität bereitstellt.

Die Patentschrift EP 1 631 071 A1 betrifft ein Informationsverarbeitungsgerät zum Unterstützen einer Inhaltsverarbeitung, wie z. B. Aufnehmen, voreingestelltes Aufzeichnen und Wiedergabe eines Fernsehprogramms.

Der vorliegenden Erfindung liegt die Aufgabe zugrunde, ein Verfahren anzugeben, dass eine besonders einfache und strukturell übersichtliche Bedienung ermöglicht, wenn die Aufzeichnung von Sendungen mit gleichen Titeln, Nachrichtensendungen mit gleichen Titeln oder zu bestimmten Zeiten oder auch Serien aufgezeichnet werden sollen. Die Erfindung soll dabei sowohl anwendbar sein, wenn das Speichermedium beispielsweise ein extern anschließbarer Videorecorder, ein DVD-Recorder oder ein Festplattenspeicher ist oder in einem solchen Gerät ist, das im Fernsehgerät integriert ist. Ebenso kann anstelle eines Festplattenspeichers auch ein anderer Massenspeicher verwendet werden, der geeignet ist, ganze Spielfilme aufzuzeichnen.

Die Aufgabe löst die Erfindung durch Anwendung eines Verfahrens, wie es im Anspruch 1 angegeben wird, in einem Speichergerät oder in einem mit einem Speichergerät verbindbaren unterhaltungselektronischen Empfangsgerät. Vorteilhafte Ausgestaltungen des Verfahrens und einzelne Verfahrensschritte sind in den abhängigen Unteransprüchen im Detail angegeben.

Die Fernseh- und/oder Rundfunksignale können analoge oder digitale Signale sein, die terrestrisch oder über Satellit übertragen und empfangen werden oder auch solche, die über das Internet empfangbar sind. Die empfangenen Signale können dabei unverändert aufgezeichnet werden oder umgesetzt in ein bestimmtes Format unverschlüsselt oder verschlüsselt aufgezeichnet werden. Bei verschlüsselter Aufzeichnung muss bei der Wiedergabe ein entsprechender Descrampler vorhanden sein. Unter Bildschirm versteht die Erfindung jedwedes Display jedweder Technologie, das geeignet ist, Video-Bilder darzustellen.

Das Verfahren nach der Erfindung zeichnet sich dadurch aus, dass bei der Auswahl automatisch ein Untermenü mit Tastenanzeigen oder einem Cursorauswahlmenü angezeigt wird, aus dem der Benutzer wählen kann, ob Programmbeiträge mit dem gleichen Titel aufgezeichnet werden sollen, ob eine Folgeaufzeichnung einer Serie von zugeordneten Programmbeiträgen, die zu unterschiedlichen Zeiten von einem Sender empfangen werden, oder eine Aktualisierungsaufzeichnung, d.h. eine Überschreibung der vorhergehenden Aufzeichnung auf dem Speichermedium erfolgen soll. Nach Auswahl innerhalb des Untermenüs bewirkt die Steuerschaltung des Gerätes die Aufzeichnung entsprechend der mit programmierten Aufnahmezeit. Durch Betätigung einer Archivtaste auf der Bedieneinheit werden mindestens die Titel der gespeicherten Programmbeiträge in einer Übersicht angezeigt, so dass aus diesen eine gewünschte Wiedergabe durch Cursorauswahl und durch Betätigung einer zugeordneten Wiedergabetaste auf der Bedieneinheit erfolgen kann.

Die Bedienung ist auf eine Menüführung ausgerichtet und geht davon aus, dass die EPG-Daten strukturiert oder nicht strukturiert, beispielsweise auch nach Themen geordnet, auf dem Bildschirm angezeigt werden. Wenn die Datenlisten sehr lang sind, werden die EPG-Daten im Scrolling-Verfahren angezeigt. Solchen Menüdarstellungen sind in der Regel die zu betätigenden Tastenfunktionen in einer unteren Zeile zugeordnet dargestellt, so dass hierüber eine Benutzerhilfe gegeben ist, damit der Bedienende weiß, welche Fernbedienungsgebertasten oder welche Bedientasten an der Ortsbedienung am Gerät er betätigen muss. Wenn der Benutzer eine Auswahl getroffen hat, beispielsweise Nachrichten, Tagesschau (also ARD), dann wird automatisch ein Untermenü eingeblendet mit Tastenanzeigen oder einer Cursorauswahl, worüber angezeigt wird, dass der Benutzer hieraus auswählen kann, ob der Programmbeitrag mit dem gleichen Titel aufgezeichnet werden soll oder ob eine Folgeaufzeichnung einer Serie von zugeordneten Programmbeiträgen erfolgen soll oder eine Aktualisierungsaufzeichnung. Im Falle der Aktualisierungsaufzeichnung kann ein weiteres Untermenü vorgesehen sein, aus dem ausgewählt werden kann, ob nur die aktuellste Mitteilung gespeichert werden soll, also alle anderen vorhergehenden jeweils überschrieben werden, oder ob zwei, drei oder vier der letzten gespeichert bleiben sollen, um diese wahlweise dann angezeigt zu erhalten und auswählen zu können.

Wenn die entsprechende Auswahl erfolgt ist, übernimmt die Steuerschaltung des Gerätes, z.B. eine computergesteuerte Schaltung, die Steuerung der Aufzeichnung, so dass zu der mit dem Titel in direkter Verbindung stehenden Aufnahmezeit das Gerät auf Aufnahme geschaltet wird und den Programmbeitrag aufzeichnet. Es versteht sich dabei von selbst, dass dann, wenn es sich um empfangene analoge Fernsehsignale handelt, diese demoduliert und aufbereitet werden müssen, um aufgezeichnet bzw. dargestellt werden zu können, z.B. als FBAS-Signale. Im Falle von digital empfangenen Fernsehsignalen nach dem MPEG-Standard ist eine Decodierung erforderlich, um die Daten darstellen zu können. Die empfangenen Signale können auch direkt undecodiert gespeichert werden und werden nachher bei der Wiedergabe decodiert. Sie können aber auch bereits decodiert abgespeichert werden; diese Systeme sind alle bekannt. Selbstverständlich kann als Quelle auch eine Internetquelle dienen, wenn ein entsprechendes Empfangsteil vorgesehen ist. In gleicher Weise sind auch empfangene Tonrundfunksignale aufzeichenbar. Auch diese können beispielsweise Signale von Nachrichtensendern beinhalten, so dass auch diese gespeichert werden können, wenn sie entsprechend ausgewählt sind. In diesem Fall kann auch das Empfangsgerät ein anderes Empfangsgerät als ein Fernsehgerät sein. Es muss aber auch ein Display für die Anzeige der Übersicht aufweisen und eine Menüsteuerung, um in gewünschter Weise die Auswahl treffen und die Aufzeichnung und Wiedergabe steuern zu können.

Des Weiteren ist in der Eingabevorrichtung, z.B. der Ortsbedienung oder der Fernbedienung, eine Funktionstaste "Archivtaste" vorgesehen, bei deren Betätigung der Benutzer sofort einen Überblick über die abgespeicherten Programmbeiträge erhält, aus dem er dann den Beitrag auswählen kann, den er anzusehen bzw. anzuhören wünscht. Die Auswahl kann durch bekannte Cursorführung erfolgen, indem der Cursor auf die entsprechende Zeile und/oder Spalte gelenkt wird und durch eine Bestätigungstaste, in der Regel die "OK"-Taste, die Wiedergabe gesteuert wird. In dem Anzeigefeld kann neben der Angabe des Titels auch die Uhrzeit der Speicherung angezeigt werden. Des Weiteren kann auch zur Übersichtlichkeit ein Anzeigefeld, beispielsweise mit einer eingetragenen Zeitung, darauf hinweisen, dass es sich um einen Nachrichtensender handelt oder im Falle von Serien ein Serienemblem anzeigen, das entweder zum entsprechenden Titel schon mit abgespeichert oder frei eingebbar ist. Es ist ferner bei der Auswahl möglich, über eine weitere Taste Details angezeigt zu erhalten. Hierzu kann beispielsweise die ohnehin vorgesehene Taste "Text" auf einem Fernbedienungsgeber verwendet werden. Die zu bedienenden Tasten können in einer Fußzeile oder in einem Fußbereich auf dem Bildschirm angezeigt werden, um die entsprechende Auswahl leichter treffen zu können.

Wenn ein ausgewählter abgespeicherter Programmbeitrag abgespielt ist, kann automatisch wieder auf Fernsehbetrieb umgestellt werden oder auf einen anderen Wiedergabebetrieb. Es kann aber auch automatisch oder durch Betätigen einer Aufruftaste jederzeit ein Menü angezeigt werden, aus dem mindestens zwischen zwei Funktionen, nämlich der Löschfunktion und einer neuen Programmierung, ausgewählt werden kann. Wenn die Löschtaste gedrückt wird, wird das gerade wiedergegebene Programm oder das aus der Archivübersicht ausgewählte Programm gelöscht. Die Löschtaste kann in den beiden Untermenüs jeweils angezeigt werden. Wird hingegen die Taste betätigt, die zu einer neuen Programmierung führt, so wird darüber automatisch die Erstprogrammierungsübersicht angezeigt. Anstelle dieser Tastenfunktion kann aber auch die Erstprogrammierungsfunktionstaste verwendet werden, um eine erneute Programmierung vornehmen zu können. Diese Funktionen können auch während des Abspielens betätigt werden. Wird die Löschfunktion während des Abspielens betätigt, wird der gesamte Beitrag gelöscht, so dass dieser Speicherplatz für neue Aufzeichnungen zur Verfügung steht. Wird die vorgesehene Wiedergabetaste für Nachrichten gewählt, so erscheint nur eine Nachricht. Diese Nachricht wird zweckmäßigerweise so lange erhalten, bis eine neue Nachricht aufgezeichnet wird, es sei denn, der Sender wird schlechthin gelöscht. Dies hat zur Folge, dass der Benutzer immer mit der neuesten Nachricht konfrontiert wird, die in der Zwischenzeit aufgezeichnet worden ist.

Die Steuereinheit kann auch eine Detektorschaltung beinhalten, die anhand des Titels automatisch erkennt, ob es sich um eine Nachrichten- oder um eine Unterhaltungsendung handelt. Hierzu können beispielsweise in einer Tabelle entsprechende Stichworte abgelegt werden, wie "Tagesschau", "Heute", "Abendschau" "NTV Nachrichten" usw.. Der Computer der Steuereinheit vergleicht also die EPG-Einträge mit den in der Tabelle enthaltenen Titel und kann sofort auf die Programmart schließen. Im Falle, dass eine Nachrichtensendung ausgewählt ist oder anliegt, erfolgt automatisch die Menüeinblendung des Untermenüs mit der Aktualisierungsanzeige zur Auswahl. Der Aktualisierungsvorgang kann auch automatisch programmiert werden, selbst dann, wenn der Benutzer überhaupt keine Auswahl aus der EPG führt, da die Auswahlbegriffe von ihm zuvor in dem Speicher abgespeichert worden sind und alle Programmbeiträge, die diesen Titel tragen, aufgezeichnet werden. Umgekehrt kann der Computer aber auch erkennen, dass es sich nicht um eine Aufzeichnung einer Nachrichtensendung handelt, so dass z.B. Serien fortlaufend aufgezeichnet werden. Dabei kann ein Untermenü (Programm) vorgesehen sein, dass vorsieht, wie viele Programmbeiträge zur Serie aufgezeichnet werden sollen.

Als Auswahlkriterium können aber auch die Aufnahmezeiten bei der Erstprogrammierung herangezogen werden. Beispielsweise wird jeweils abends zwischen 20.00 und 20.15 Uhr im ARD der Programmbeitrag "Tagesschau" abgestrahlt, so dass das Kriterium nicht "TAGESSCHAU" sein muss, sondern auch "20.00 - 20.15 Uhr ARD" sein kann. In diesem Fall werden ebenfalls die zugeordneten Daten aufgezeichnet, allerdings dann nur immer tageweise die Nachrichten, die zur betreffenden Uhrzeit gesendet werden.

Bei der Aktualisierungsaufzeichnung kann durch eine im Hintergrund des Empfangsgerätes laufende Abstimmung dafür Sorge getragen werden, dass immer nur die aktuellste Nachricht unter dem betreffenden ausgewählten Nachrichtentitel, wie "Tagesschau", "Tagesthemen", "Abendschau" und dergleichen, abgespeichert werden, wodurch die jeweilige vorherige Sendung überschrieben wird. Will sich der Benutzer die aktuelle Nachrichtenschau ansehen, so kann er diese durch einen Tastenaufruf direkt aufrufen oder zunächst die Speicherübersicht der Titel aufrufen, um daraus die Wiedergabe auswählen zu können.

Die Prozesse nach der Erfindung laufen vollständig automatisch ab. Insbesondere wird sofort automatisch das Untermenü mit der Auswahl eines Programmbeitrags aus der Programmbeitragübersicht aufgerufen. Dieses kann bei gleichzeitiger Auswertung mit der Steuereinheit und Detektorschaltung anhand des Titels automatisch erfolgen. Hierzu sind beispielsweise Vergleichsworte in einem Speicher abgespeichert, beispielsweise "Nachrichten", "Tagesschau", Rundschau", "RTL-News" usw.. Wenn die Übereinstimmung festgestellt wird, werden die empfangenen Rundfunksignale in dem Speicher gespeichert und können parallel auch auf einem Bildschirm angezeigt werden. Unter "Bildschirm" versteht die Erfindung jegliches Display jeglicher Technologie, die für die Bild- und Textdarstellung geeignet sind.

## Patentansprüche

1. Verfahren zur Steuerung der Aufzeichnung von Fernseh- und/oder Rundfunksignalen ausgewählter Programmbeiträge, die in einer auf einem Bildschirm angezeigten Übersicht von Titeln der Programmbeiträge und/oder der angegebenen Sendezeiten dargestellt sind, wobei mittels einer Aufruftaste an der Bedieneinheit des Gerätes die Programmbeitragsübersicht auf dem Bildschirm dargestellt wird und eine Auswahl des aufzunehmenden Programmbeitrags erfolgt, mit den Schritten,
- dass bei der Auswahl eines Programmbeitrages aus der Programmbeitragsübersicht automatisch ein Untermenü mit Tastenanzeige oder einer Cursorauswahl dargestellt wird, aus der der Benutzer wählen kann, ob Programmbeiträge mit dem gleichen Titel aufgezeichnet werden sollen, ob eine Folgeaufzeichnung einer Serie von zugeordneten Programmbeiträgen, die zu unterschiedlichen Zeiten von einem Sender empfangen werden, oder eine Aktualisierungsaufzeichnung, d.h. eine Überschreibung der vorhergehenden Aufzeichnung auf dem Speichermedium erfolgen soll,
- dass nach Auswahl innerhalb des Untermenüs die Steuerschaltung des Gerätes die Aufzeichnung entsprechend der damit programmierten Aufnahmezeit bewirkt,
**dadurch gekennzeichnet,**
- **dass** durch Betätigung einer Archivtaste auf der Bedieneinheit mindestens die Titel der gespeicherten Programmbeiträge in einer Übersicht angezeigt werden und aus diesen eine gewünschte Wiedergabe durch eine Cursorauswahl und/oder durch Betätigung einer zugeordneten Wiedergabetaste auf der Bedieneinheit erfolgt, und
- **dass** nach dem Abspielen eines ausgewählten gespeicherten Programmbeitrags aus dem Speichermedium automatisch ein Menü angezeigt wird, aus dem mindestens zwischen einer Löschfunktion und einer erneuten Programmierung des gerade wiedergegebenen Programmbeitrags ausgewählt werden kann.

2. Verfahren nach Anspruch 1, **dadurchgekennzeichnet**, dass durch eine Aufruftaste jederzeit ein Menü anzeigbar ist, aus dem mindestens zwischen einer Löschfunktion oder einer neuen Programmierung ausgewählt werden kann, ob eine erneute Programmierung erfolgen soll, oder dass durch Betätigen der Erstprogrammierungsfunktionstaste die EPG-Daten der Programmbeitragsübersicht für eine Neuprogrammierung angezeigt werden.

3. Verfahren nach Anspruch 2, **dadurch gekennzeichnet, dass** eine Löschtaste auf der Bedieneinheit vorgesehen ist oder die Tastenfunktion in einem Menü dargestellt ist, mit der im Speicher abgelegte Programmbeiträge gelöscht werden können, wobei gleichzeitig die Löschung der voreingestellten Programmierung erfolgt.

4. Verfahren nach Anspruch 1, **dadurch gekennzeichnet, dass** bei Betätigung einer Taste oder einer auslösbaren Tastenfunktion "Programmbeitrag aktualisieren" auf dem Bildschirm die Steuereinheit veranlasst wird, vorprogrammiert ein, zwei oder mehrere entsprechende Programmbeiträge abzuspeichern und nach dem Prinzip First-In First-Out die überzählige Speicherung zu überschreiben.

5. Verfahren nach Anspruch 1, **dadurch gekennzeichnet, dass** die Steuereinheit eine Detektorschaltung beinhaltet, die anhand des Titels automatisch erkennt, ob es sich um eine Nachrichten- oder um eine Unterhaltungssendung handelt, wobei im Falle der Nachrichtensendung automatisch bei der Menüeinblendung des Untermenüs die Aktualisierungsanzeige zur Auswahl auswählbar angezeigt wird oder der Aktualisierungsvorgang automatisch programmiert wird, wenn bei der Erstauswahl "Nachrichten" ausgewählt sind.

6. Verfahren nach Anspruch 1 und 5, **dadurch gekennzeichnet, dass** im Falle der Serienaufzeichnung automatisch erkannt wird, dass es sich um keine Nachrichtensendung handelt und ein Menü dargestellt wird, das eine Auswahl zwischen bestimmten Serienprogrammbeiträgen oder allen Programmbeiträgen für die Aufzeichnung darstellt, in welchen der Benutzer durch Cursorführung oder Betätigen einer angezeigten Taste eine Auswahl treffen kann.

7. Verfahren nach Anspruch 1, d**adurchgekennzeichnet**, dass als Auswahlkriterium Zeiten angezeigt werden und dass durch Cursorführung die Speicherzeiten auswählbar sind und dass in den Folgetagen zu den gleichen Zeiten eine Aufzeichnung erfolgt.

8. Verfahren nach Anspruch 1, **dadurch gekennzeichnet, dass** das Aufzeichnungsgerät in einem Fernsehgerät mit einem Bedienfeld mit Tasten und/oder in einem Fernbedienungsgeber integriert ist und dass auf dem Bildschirm eine Signalisierungsanzeige erfolgt, wenn ein ausgewähltes Programm aufgezeigt wird, und zwar unabhängig davon, ob vom gleichen Sender das gleiche oder ein anderes Programm oder von einem anderen Sender ein anderes Programm empfangen wird.

9. Verfahren nach Anspruch 1, **dadurch gekennzeichnet, dass** das Gerät ein Fernsehgerät ist und das Speichermedium eine externe oder interne Festplatte oder ein anderer Massenspeicher ist, auf dem die Signale digitalisiert gespeichert werden.

10. Verfahren nach Anspruch 1, **dadurch gekennzeichnet, dass** die empfangenen Fernseh- und/oder Rundfunksignale analoge oder digitale Signale sind, die umgesetzt oder nicht umgesetzt, verschlüsselt oder nicht verschlüsselt, aufgezeichnet werden.

## Claims

1. Method for controlling the recording of television and/or radio broadcast signals of selected programmes, which are illustrated in an overview, which is displayed on a screen, of titles of the programmes and/or of the notified transmission times, wherein the programme overview is illustrated on the screen by means of a call-up button at the control unit of the apparatus and a selection of the programme to be received takes place, with the steps:
- that on selection of a programme from the programme overview a sub-menu with button displays or a cursor selection is automatically illustrated, from which the user can select whether programmes with the same title are to be recorded or whether successive recording of a series of associated programmes received at different times by a transmitter or an updating recording, i.e. recording over the previous recording on the memory medium, shall take place,
- that after selection within the sub-menu the control circuit of the apparatus causes the recording to take place in correspondence with the thus-programmed receiving time, **characterised in that**
- through action of an archive button on the control unit at least the titles of the stored programmes are shown in an overview and from these a desired reproduction through cursor selection and/or through actuation of an associated reproducing button takes place on the control unit and
- after playing a selected, stored programme from the memory medium a menu is automatically displayed from which selection can be made at least between an erasing function and a repeated programming of the just-reproduced programme.

2. Method according to claim 1, **characterised in that** through a call-up button it is possible at any time to display a menu from which selection can be made, at least between an erasing function or new programming, whether repeated programming shall take place, or that through actuation of the first programming function button the Electronic Programme Guide data of the programme overview for new programming are displayed.

3. Method according to claim 2, **characterised in that** an erasing button is provided on the control unit or the button function is illustrated in a menu, by which programmes filed in the memory can be erased, wherein at the same time erasure of the preset programming takes place.

4. Method according to claim 1, **characterised in that** on actuation of a button or a triggererable button function 'update programme' on the screen the control unit is caused to store, preprogrammed, one, two or more corresponding programmes and to record over the surplus storage according to the principle of first-in / first-out.

5. Method according to claim 1, **characterised in that** the control unit includes a detector circuit which on the basis of the title automatically recognises whether it is a news transmission or an entertainment transmission, wherein in the case of the news transmission the updating display for selection is selectably automatically displayed when menu display of the sub-menu takes place or the updating process is automatically programmed when 'news' is selected when the first selection takes place.

6. Method according to claim 1 and 5, **characterised in that** in the case of serial recording it is automatically recognised that it is not a news transmission and a menu is illustrated which illustrates a selection between specific serial programmes or all programmes for recording, in which the user can make a selection by guiding a cursor or actuation of a displayed button.

7. Method according claim 1, **characterised in that** times are displayed as selection criterian and that the storage times are selectable by guidance of a cursor and that recording takes place in the succeeding days at the same times.

8. Method according to claim 1, **characterised in that** the recording apparatus is integrated in a television apparatus with a control panel with buttons and/or in a remote control transmitter and that a signal display takes place on the screen when a selected programme is recorded and, in particular, regardless of whether the same or a different programme is received by the same transmitter or a different programme is received by different transmitter.

9. Method according to claim 1, **characterised in that** the apparatus is a television set and the memory medium is an external or internal hard disc or another bulk memory means on which the signals are digitally stored.

10. Method according to claim 1, **characterised in that** the received television and/or broadcast radio signals are analog or digital signals which are recorded in converted or unconverted form or coded or uncoded form.

## Revendications

1. Procédé de commande de l'enregistrement des signaux de télévision et de radio de programmes sélectionnés qui sont présentés sur un aperçu affiché sur un écran des titres des programmes et/ou des heures d'émission indiquées, l'aperçu des programmes étant affiché sur l'écran au moyen d'une touche d'appel sur l'unité de commande de l'appareil et une sélection du programme à enregistrer étant effectuée avec les étapes suivantes
- que lors de la sélection d'un programme dans l'aperçu des programmes, un sous-menu apparaît automatiquement avec affichage de touches ou sélection du curseur, à partir duquel l'utilisateur peut choisir si les programmes avec le même titre doivent être enregistrés, si une enregistrement consécutif d'une série de programmes attribués qui sont reçus à différentes heures par un émetteur ou si un enregistrement de mise à jour, soit un écrasement de l'enregistrement sur le média de sauvegarde, doit avoir lieu,
- qu'après sélection dans le sous-menu, la commutation de commande de l'appareil provoque l'enregistrement en respect du temps d'enregistrement programmé avec, caractérisé en cela
- que par l'actionnement d'une touche d'archive sur l'unité de commande au moins le titre des programmes enregistrés s'affiche dans un aperçu et qu'à partir de celui-ci une lecture a lieu par une sélection du curseur et/ou par l'actionnement d'une touche de lecture attitrée sur l'unité de commande, et
- que, après lecture d'un programme enregistré sélectionné à partir du média de sauvegarde, un menu est affiché automatiquement dans lequel il est possible de choisir au moins entre une fonction de suppression et une nouvelle programmation du programme qui vient d'être lu.

2. Procédé selon la revendication 1 caractérisé en cela qu'un menu peut être affiché à tout moment avec une touche d'appel dans lequel il est possible de choisir au moins entre une fonction de suppression ou une nouvelle programmation, et si une nouvelle programmation doit avoir lieu, ou en cela que par l'actionnement de la touche de fonction de première programmation, les données EPG de l'aperçu des programmes sont affichées pour une nouvelle programmation.

3. Procédé selon la revendication 2 caractérisé en cela qu'une touche de suppression est prévue sur l'unité de commande ou que la touche de fonction est affichée dans un menu, avec laquelle il est possible de supprimer les programmes enregistrés en mémoire, la suppression de la programmation préparamétrée ayant lieu en même temps.

4. Procédé selon la revendication 1 caractérisé en cela quelors de l'actionnement d'une touche ou d'une touche de fonction actionnable "Mise à jour du programme" sur l'écran l'unité de commande va provoquer l'enregistrement préprogrammé d'un, deux ou plusieurs programmes correspondants et l'écrasement de l'enregistrement en trop selon le principe first-in, first-out.

5. Procédé selon la revendication 1 caractérisé en cela que l'unité de commandecontient une commutation avec détecteur qui reconnaît automatiquement à l'aide du titre s'il s'agit d'un émission d'informations ou de divertissement, en cas d'émission d'informations, l'affichage de la mise à jour étant affiché automatiquement pour sélection dans l'affichage du sous-menu ou le processus de mise à jour étant automatiquement programmé si lors de la première sélection "Informations" a été sélectionné.

6. Procédé selon la revendication 1 et 5 caractérisé en cela qu'en cas d'enregistrement de séries il est possible de détecter automatiquement qu'il ne s'agit pas d'émission d'informations et un menu est affiché qui présente une sélection entre certains programmes de série ou tous les programmes pour l'enregistrement parmi lesquels l'utilisateur peut effectuer une sélection en guidant le curseur ou en actionnant une touche affichée.

7. Procédé selon la revendication 1 caractérisé en cela que les horaires sont affichés comme critère de sélection et que par le guidage du curseur les horaires d'enregistrement peuvent être sélectionnés et que dans les jours suivants, un enregistrement a lieu aux mêmes heures.

8. Procédé selon la revendication 1 caractérisé en cela que l'appareil d'enregistrement est intégré dans un téléviseur avec un champ de commande avec des touches et/ou dans une télécommande et que sur l'écran un affichage de la signalisation a lieu lorsqu'un programme sélectionné est affiché, indépendamment du fait que du même émetteur un même programme ou un autre programme ou d'un autre émetteur un autre programme soit reçu.

9. Procédé selon la revendication 1 caractérisé en cela quel'appareil est un téléviseur et que le média de sauvegarde est un disque dur externe ou interne ou une autre mémoire de masse sur laquelle les signaux sont enregistrés au format numérique.

10. Procédé selon la revendication 1 caractérisé en cela que lessignaux de télévision et/ou de radio reçus sont des signaux analogues ou numériques qui sont enregistrés transformés ou non, sont cryptés ou non.
